# EUROPÄISCHE PATENTSCHRIFT

(11) **EP 2 837 456 B1**
(45) Veröffentlichungstag und Bekanntmachung des Hinweises auf die Patenterteilung: **09.12.2015**
(21) Anmeldenummer: 14170658.0
(22) Anmeldetag: 30.05.2014
(51) Int. Cl.: B23D 53/04

(54) **Sägemaschine und Verfahren zum Steuern einer Sägemaschine**
Sawing machine and method for controlling a sawing machine
Scie mécanique et procédé de commande d'une scie mécanique

(30) Priorität: 06.06.2013 DE 102013210573
(43) Veröffentlichungstag der Anmeldung: 18.02.2015
(73) Patentinhaber: KEURO Besitz GmbH & Co. EDV-Dienstleistungs KG, 77855 Achern (DE)
(72) Erfinder: Sabel, Andre, 67410 Drusenheim (FR); Oberle, Markus, 77876 Kappelrodeck (DE)
(74) Vertreter: Lemcke, Brommer & Partner Patentanwälte Partnerschaft mbB

(56) Entgegenhaltungen:
- EP-A1- 1 398 119
- US-A- 4 524 812
- US-A1- 2006 032 356

## Beschreibung

Die vorliegende Erfindung betrifft ein Verfahren zum Steuern einer Sägemaschine nach dem Oberbegriff des Anspruchs 1 sowie eine Sägemaschine nach dem Oberbegriff des Anspruchs 11. Eine solche Sägemaschine enthält ein Sägewerkzeug, das von einem elektrischen Sägewerkzeugantrieb mit einem ersten Frequenzumrichter angetrieben wird. Ferner ist eine Sägevorschubeinrichtung vorhanden, die das angetriebene Sägewerkzeug relativ zu einem zu sägenden Werkstück mit einer Vorschubgeschwindigkeit bewegt. Diese Sägevorschubeinrichtung ist derart ausgebildet, dass die Vorschubgeschwindigkeit, mit der das angetriebene Sägewerkzeug angetrieben wird, beim Eingriff des Sägewerkzeugs in das Werkstück von einer Leerlaufvorschubgeschwindigkeit auf eine Arbeitsvorschubgeschwindigkeit umgesteuert wird.

Sägemaschinen der vorliegenden Art sind üblicherweise als Bandsägemaschinen oder als Kreissägemaschinen ausgebildet. Es sind jedoch auch andere Arten von Sägemaschinen von der Erfindung umfasst, insbesondere Bügelsägemaschinen.

Das Hauptanwendungsgebiet der vorliegenden Erfindung betrifft Sägemaschinen der eingangs genannten Art, die zum Schneiden bzw. Sägen von Werkstücken aus Metall vorgesehen sind.

Je nach Art der Sägemaschine wird das angetriebene Sägewerkzeug, das insbesondere ein Sägeband oder ein Kreissägeblatt sein kann, relativ zum Werkstück linear oder um eine Schwenkachse bewegt, wobei die Werkstücke vergleichsweise schwer sind und mittels Fördereinrichtungen auf einen Sägetisch gelegt und dort eingespannt werden.

Da Sägemaschinen der vorliegenden Art üblicherweise Werkstücke mit unterschiedlichen Querschnitten sägen, ist es notwendig, für das Einspannen eines neuen Werkstücks das Sägewerkzeug in eine Anfangsposition zu bewegen, in der der maximal mögliche Werkstückquerschnitt freigegeben ist. Insbesondere dann, wenn Werkstücke gesägt werden sollen, die nicht den maximal möglichen Querschnitt aufweisen, muss das Sägewerkzeug zu Beginn eines Sägevorgangs demnach eine relativ weite Strecke der Vorschubbewegung zurücklegen, bis das Sägewerkzeug in das Werkstück eindringt und der eigentliche Schneidvorgang beginnt. Auch dann, wenn ein Sägevorgang abgebrochen und das Sägewerkzeug aus dem Material des Werkstücks herausgenommen werden muss, muss das Sägewerkzeug beim Fortsetzen des Sägevorgangs eine verhältnismäßig lange Vorschubstrecke zurücklegen, bis es wieder in Eingriff mit dem Werkstück gelangt und der eigentliche Schneidvorgang fortgesetzt werden kann.

Der eigentliche Schneidvorgang, also die Vorschubbewegung des Sägewerkzeugs beim spanabhebenden Eingriff des Sägewerkzeugs im Werkstück, erfolgt mit einer Arbeitsvorschubgeschwindigkeit, die naturgemäß von den Materialeigenschaften abhängt und bei Werkstücken aus Metall üblicherweise nur in der Größenordnung von wenigen mm/sec liegt. Um die Nebenzeiten eines Sägevorgangs, die vor und nach dem eigentlichen Schneidvorgang liegen, möglichst gering zu halten, ist es notwendig, die Vorschubgeschwindigkeit des Sägewerkzeugs außerhalb des eigentlichen Schneidvorgangs zu erhöhen, insbesondere beim Annähern des Sägewerkzeugs an das Werkstück. Denn wenn die oben angesprochene, verhältnismäßig große Strecke der Vorschubbewegung, die das Sägewerkzeug bis zum Beginn des eigentlichen Schneidvorgangs in der Regel zurücklegen muss, lediglich mit der Arbeitsvorschubgeschwindigkeit erfolgt, ergeben sich hohe Nebenzeiten, die die Produktivität der Sägemaschine limitieren und entsprechende Kosten verursachen.

Bei einem Verfahren und einer Sägemaschine der vorliegenden Art wird die Vorschubgeschwindigkeit des Sägewerkzeugs daher beim Eingriff desselben in das Werkstück von einer höheren Leerlaufvorschubgeschwindigkeit auf die Arbeitsvorschubgeschwindigkeit umgesteuert. So lange das Sägewerkzeug noch nicht im Eingriff mit dem Werkstück ist, wird es also relativ zum Werkstück schneller bewegt, insbesondere auf das Werkstück abgesenkt, so dass sich die Nebenzeiten des Sägevorgangs entsprechend verringern. "Beim Eingriff" des Sägewerkzeugs in das Werkstück soll hierbei bedeuten, dass das Umsteuern von der Leerlaufvorschubgeschwindigkeit auf die Arbeitsvorschubgeschwindigkeit kurz vor Beginn des Eingriffs, im Moment des ersten Eingriffs oder kurz nach Beginn des Eingriffs des Sägewerkzeugs in das Werkstück erfolgt.

Problematisch ist hier, dass das angetriebene Sägewerkzeug beschädigt wird, wenn es mit einer zu hohen Vorschubgeschwindigkeit auf das Werkstück auftrifft und in dieses eindringt. Die Leerlaufvorschubgeschwindigkeit muss daher relativ niedrig gewählt sein, oder es muss gewährleistet sein, dass die Vorschubgeschwindigkeit so rechtzeitig von der Leerlaufvorschubgeschwindigkeit auf die Arbeitsvorschubgeschwindigkeit umgesteuert wird, dass eine Beschädigung des Sägewerkzeugs ausgeschlossen ist.

Im Stand der Technik gibt es hierfür mehrere Ansätze. Beispielsweise wird in der DE 24 57 537 A1 oder der DE 100 43 012 A1 laufend ein Schneidwiderstand am Sägeband einer Bandsägemaschine gemessen und die Vorschubgeschwindigkeit anhand der Messergebnisse gesteuert, um eine Überlastung des Sägebandes zu vermeiden. Eine entsprechende Bandsägemaschine ist auch in der DE 33 11 390 A1 offenbart. In der DE 28 08 245 A1 wird die Vorschubgeschwindigkeit in Abhängigkeit von der Laufgeschwindigkeit des Sägebands einer Bandsägemaschine geregelt. Sobald sich die Sägeband-Laufgeschwindigkeit verringert, wird die Vorschubgeschwindigkeit abgebremst, um eine Überlastung des Sägebands zu vermeiden. In der EP 0 313 429 B1 wird eine hydraulisch betriebene Bandsägemaschine hinsichtlich eines Anstiegs des Schneidwiderstands überwacht, und bei einem Anstieg desselben wird die Vorschubgeschwindigkeit verringert, so dass die Vorschubgeschwindigkeit in etwa beim Eingriff des Sägewerkzeugs in das Werkstück von einer Leerlaufvorschubgeschwindigkeit auf eine Arbeitsvorschubgeschwindigkeit umgesteuert wird.

Gemeinsam ist diesen bekannten Lösungsansätzen, dass das Umsteuern der Vorschubgeschwindigkeit relativ langsam erfolgt, so dass eine Überlastung des Sägewerkzeugs beim ersten Eingriff in das Werkstück nicht zuverlässig vermieden werden kann.

Andere Maßnahmen im Stand der Technik arbeiten mit voreingegebenen oder durch Sensoren ermittelten geometrischen Daten des zu sägenden Werkstücks, so dass die Vorschubbewegung des Sägewerkzeugs kurz vor einem Eingriff in das Werkstück abgebremst werden kann. Das Umsteuern von einer Leerlaufvorschubgeschwindigkeit auf die Arbeitsvorschubgeschwindigkeit erfolgt in diesen Fällen also noch vor dem ersten Kontakt zwischen dem Sägewerkzeug und dem zu sägenden Werkstück. Dies schließt eine Beschädigung des Sägewerkzeugs aufgrund einer zu hohen Vorschubgeschwindigkeit aus, bedingt jedoch zusätzlichen sensorischen und steuerungstechnischen Aufwand oder sorgfältiges und gut ausgebildetes Bedienpersonal, was wiederum entsprechende Zusatzkosten mit sich bringt. US 2006/0032356 offenbart ein Verfahren zum Steuern einer Sägemaschine gemäß dem Oberbegriff vom Anspruch 1 und eine Sägemaschine gemäß dem Oberbegriff vom Anspruch 11.

Der vorliegenden Erfindung liegt daher die Aufgabe zugrunde, ein Verfahren zum Steuern einer Sägemaschine sowie eine Sägemaschine der eingangs genannten Art vorzuschlagen, bei der ein Umsteuern der Vorschubgeschwindigkeit des Sägewerkzeugs von einer Leerlaufvorschubgeschwindigkeit auf eine Arbeitsvorschubgeschwindigkeit zuverlässig und rechtzeitig erfolgt, um eine Beschädigung des Sägewerkzeugs beim Eingriff in das Werkstück zu vermeiden, ohne zusätzlichen steuerungstechnischen Aufwand zu benötigen und ohne besonders geschultes und zuverlässiges Bedienpersonal voraussetzen zu müssen.

Gelöst ist diese Aufgabe durch ein Verfahren mit den Merkmalen des Anspruchs 1 sowie durch eine Sägemaschine mit den Merkmalen des Anspruchs 11. Bevorzugte Weiterbildungen des erfindungsgemäßen Verfahrens finden sich in den Ansprüchen 2 bis 10, vorteilhafte Ausgestaltungen der erfindungsgemäßen Sägemaschine sind in den Ansprüchen 12 bis 17 niedergelegt.

Die erfindungsgemäße Sägemaschine, die, wie an sich bekannt, ein Sägewerkzeug umfasst, das von einem elektrischen Sägewerkzeugantrieb mit einem ersten Frequenzumrichter angetrieben wird, und eine Sägevorschubeinrichtung zum Bewegen des angetriebenen Sägewerkzeugs relativ zu einem zu sägenden Werkstück mit einer Vorschubgeschwindigkeit aufweist, sowie das erfindungsgemäße Verfahren zeichnen sich also dadurch aus, dass am ersten Frequenzumrichter ein Wert einer physikalischen Größe ermittelt wird, die dem vom Sägewerkzeugantrieb auf das Sägewerkzeug übertragenen Drehmoment entspricht oder aus der eine Veränderung dieses Drehmoments errechnet werden kann, und dass beim Eingriff des Sägewerkzeugs in das Werkstück in Abhängigkeit vom Wert dieser physikalischen Größe ein Umsteuern der Vorschubgeschwindigkeit von einer Leerlaufvorschubgeschwindigkeit auf eine Arbeitsvorschubgeschwindigkeit erfolgt.

Gemäß der vorliegenden Erfindung kann ein Umsteuern von einer vorteilhaft hohen Leerlaufvorschubgeschwindigkeit auf die Arbeitsvorschubgeschwindigkeit also ohne zusätzlichen steuerungs- und regelungstechnischen Aufwand erfolgen. Denn Sägemaschinen der vorliegenden Art werden in der Regel mit einem elektrischen Sägewerkzeugantrieb versehen, bei dem ein Frequenzumrichter die Steuerung eines Elektromotors übernimmt, welcher das Sägewerkzeug, also ein Sägeblatt oder ein Sägeband, antreibt. Aus den Rückwirkungen des vom Frequenzumrichter betriebenen Motors können im Frequenzumrichter physikalische Größen ermittelt werden, die dem Drehmoment entsprechen, welches vom Sägewerkzeugantrieb auf das Sägewerkzeug übertragen wird, oder aus denen eine Veränderung dieses Drehmoments errechnet werden kann. Beispielsweise ist der Wirkstrom, der vom Frequenzumrichter an den Motor des elektrischen Sägewerkzeugantriebs abgegeben wird, eine solche physikalische Größe, die in Echtzeit Rückschlüsse über das vom Motor an das Sägewerkzeug abgegebene Drehmoment erlauben.

Das vom Sägewerkzeugantrieb auf das Sägewerkzeug übertragene Drehmoment hängt seinerseits direkt davon ab, ob das Sägewerkzeug lediglich Luft schneidet, also noch in der Leerlaufphase ist, oder ob das Sägewerkzeug im Eingriff mit dem zu sägenden Werkstück steht. Schon bei einem Ankratzen des Werkstücks, also wenn während einer Vorschubbewegung die Spitzen der Zähne des Sägewerkzeugs das Werkstück berühren, erhöht sich das vom Sägewerkzeugantrieb abgegebene Drehmoment als Antwort auf den durch den Kontakt zwischen den Sägewerkzeugzähnen und dem Werkstück erzeugten Widerstand. Im Frequenzumrichter des Sägewerkzeugantriebs kann dies beispielsweise am abgegebenen Wirkstrom in Echtzeit erkannt werden, so dass ein Umsteuern von einer Leerlaufvorschubgeschwindigkeit auf eine Arbeitsvorschubgeschwindigkeit erfolgen kann, während das Werkstück noch lediglich angekratzt wird und eine Beschädigung oder eine unzulässig hohe Belastung des Sägewerkzeugs durch den erhöhten Widerstand noch nicht zu befürchten ist.

Die vorliegenden Erfindung nutzt demnach die ohnehin bereits vorhandenen Vorrichtungen einer üblichen Sägemaschine, um in bislang unerreicht schneller Reaktionszeit zu erkennen, wann ein Umsteuern von einer vorteilhaft hohen Leerlaufvorschubgeschwindigkeit auf die Arbeitsvorschubgeschwindigkeit notwendig ist, um eine Beschädigung des Sägewerkzeugs sicher vermeiden zu können. Ein Umsteuern ist sogar in solch kurzer Zeit möglich, dass noch nicht einmal eine kurzzeitig signifikant erhöhte Belastung des Sägewerkzeugs erfolgt und damit dessen Standzeit vorteilhaft verlängert wird.

Die vorliegende Erfindung bietet also nicht nur den Vorteil, dass keinerlei zusätzliche Steuerungs- und Regeltechnik, wie insbesondere Sensoren, Lichtschranken und dergleichen verbaut werden muss, sondern sie bietet auch den zusätzlichen Vorteil einer besonders schnellen Reaktion auf am Sägewerkzeug erfolgende Veränderungen, insbesondere einen beginnenden Eingriff des Sägewerkzeugs in ein Werkstück, die sich in einer Veränderung des Drehmoments des Sägewerkzeugantriebs auswirken.

Hierbei reicht es erfindungsgemäß, wenn der Wert einer physikalischen Größe im Frequenzumrichter ermittelt wird, der Rückschlüsse auf eine Veränderung des vom Sägewerkzeugantrieb ausgeübten Drehmoments schließen lassen. Denn wenn sich dieses Drehmoment erhöht, bedeutet dies bei einer Vorschubbewegung zum Annähern des Sägewerkzeugs an das Werkstück nichts anderes, als dass das Sägewerkzeug am Werkstück angekommen ist und beginnt, dieses zu schneiden. Dies ist der Zeitpunkt, in dem von der Leerlaufvorschubgeschwindigkeit auf die Arbeitsvorschubgeschwindigkeit umgesteuert werden sollte.

Bei der vorliegenden Erfindung handelt es sich in einem ersten Aspekt also um eine sensorlose Materialerkennung bei einem Sägevorgang, bei der der Moment des ersten Ankratzens am Material erfasst wird, um die Vorschubgeschwindigkeit auf eine Arbeitsvorschubgeschwindigkeit zu reduzieren. Hierdurch lassen sich ohne zusätzliche Sensorik die Nebenzeiten eines Sägevorgangs reduzieren, da der Leerlaufweg des Sägewerkzeugs mit einer deutlich erhöhten Leerlaufvorschubgeschwindigkeit zurückgelegt werden kann. Es ist mit der vorliegenden Erfindung auch erstmals möglich, unterbrochene Sägeschnitte, bei denen das Sägewerkzeug nicht mehr direkt im Schnitt steht, zeitoptimiert fortzuführen.

Der am ersten Frequenzumrichter ermittelte Wert der physikalischen Größe, der zum Umsteuern der Vorschubgeschwindigkeit verwendet wird, wird vorzugsweise mit einem Filterverfahren zum Glätten seines zeitlichen Verlaufs oder gegebenenfalls zum Herausfiltern von Rauschsignalen bearbeitet. Eine signifikante Änderung des ermittelten Werts der physikalischen Größe kann nach einer Glättung der Messwerte leichter und eindeutiger detektiert werden.

Vorzugsweise erfolgt das Umsteuern von der Leerlaufvorschubgeschwindigkeit auf die Arbeitsvorschubgeschwindigkeit in Abhängigkeit von einer Differenz zwischen einem laufend oder in Intervallen am ersten Frequenzumrichter ermittelten Istwert der physikalischen Größe und einem mittleren Leerlaufwert. Der mittlere Leerlaufwert kann ein für eine bestimmte Sägemaschine typischer Wert sein oder zu Beginn des Sägevorgangs, bei dem das Sägewerkzeug in jedem Fall im Leerlauf läuft, ermittelt werden. Alternativ oder zusätzlich zur Auswertung einer solchen Differenz kann das Umsteuern von der Leerlaufvorschubgeschwindigkeit auf die Arbeitsvorschubgeschwindigkeit auch von einem signifikanten Anstieg des Istwertes der physikalischen Größe ausgelöst werden. Im letzteren Fall erübrigt sich das Ermitteln eines mittleren Leerlaufwertes.

Zweckmäßigerweise wird das Umsteuern von der Leerlaufvorschubgeschwindigkeit auf die Arbeitsvorschubgeschwindigkeit erst dann ausgelöst, wenn ein Schwellwert für die Differenz zwischen dem gegebenenfalls geglätteten bzw. gefilterten Istwert der physikalischen Größe und dem mittleren Leerlaufwert und/oder ein Schwellwert für einen Anstieg des Istwertes der physikalischen Größe überschritten wird. Dieser Schwellwert kann einstellbar sein, insbesondere materialabhängig, so dass die Empfindlichkeit der erfindungsgemäßen Umsteuerung justiert werden kann.

Besondere Vorteile ergeben sich bei der vorliegenden Erfindung, wenn die erfindungsgemäße Sägemaschine bzw. die erfindungsgemäß verwendete Sägemaschine neben dem ersten Frequenzumrichter des Sägewerkzeugantriebs einen zweiten Frequenzumrichter als Teil der Sägevorschubeinrichtung umfasst, wobei der zweite Frequenzumrichter einen Vorschubmotor betreibt, welcher die Relativbewegung zwischen dem angetriebenen Sägewerkzeug und dem zu sägenden Werkstück bewirkt. Hierdurch kann das erfindungsgemäße Verfahren besonders einfach und vorteilhaft umgesetzt werden, indem der zweite Frequenzumrichter auf ein Signal, das er vom ersten Frequenzumrichter erhält, den Vorschubmotor von der Leerlaufvorschubgeschwindigkeit auf die Arbeitsvorschubgeschwindigkeit umsteuert. Die Signalübermittlung vom ersten Frequenzumrichter an den zweiten Frequenzumrichter kann beispielsweise über einen digitalen Ausgang des ersten Frequenzumrichters oder über dessen Feldbusschnittstelle verzögerungsfrei erfolgen. Die Umsetzung der vorliegenden Erfindung ist somit durch entsprechendes Programmieren des ersten und des zweiten Frequenzumrichters möglich, ohne zusätzliche Steuerungen, Regelungen oder Sensoren vorsehen zu müssen.

Die direkte Signalübertragung vom ersten Frequenzumrichter an den zweiten Frequenzumrichter ist im Rahmen der vorliegenden Erfindung bevorzugt, weil dies zu einer besonders schnellen Reaktion auf eine Drehmomenterhöhung des Sägewerkzeugantriebs führt; es gibt keine Verzögerungen durch eine Signalverarbeitung in einer elektronischen Steuerung. Im Rahmen der vorliegenden Erfindung ist es jedoch auch möglich, das Umsteuern von der Leerlaufvorschubgeschwindigkeit auf die Arbeitsvorschubgeschwindigkeit durch eine zentrale Steuerung der Sägemaschine, insbesondere eirie speicherprogrammierbare Steuerung (SPS) zu veranlassen. In diesem Fall kann der erste Frequenzumrichter das Signal zum Umsteuern der Vorschubgeschwindigkeit an die zentrale Sägemaschinensteuerung melden, woraufhin diese die Arbeitsvorschubgeschwindigkeit reduziert. Soweit ein zweiter Frequenzumrichter zum Betreiben des Vorschubmotors vorhanden ist, kann dieser zweite Frequenzumrichter von der zentralen Steuerung angesprochen werden. Dieser "Umweg" über die zentrale Sägemaschinensteuerung kann insbesondere dann vorgesehen sein, wenn diese Steuerung über eine schnelle Elektronik verfügt, und es können sich dadurch Vorteile ergeben, da die Steuerung mehrere, auch veränderbare Möglichkeiten zulässt, auf ein Signal des ersten Frequenzumrichters zu reagieren.

Aufgrund der außerordentlich schnellen Reaktionszeiten zwischen einer Drehmomenterhöhung des Sägewerkzeugantriebs und einem Umsteuern der Vorschubgeschwindigkeit ist es möglich, ein Verhältnis der Arbeitsvorschubgeschwindigkeit zur Leerlaufvorschubgeschwindigkeit in einem Bereich von 1:2 bis etwa 1:10, je nach Anwendungsfall bis 1:100 und darüber hinaus zu wählen. Hierdurch reduzieren sich die Nebenzeiten eines Sägevorgangs ganz erheblich, ohne Gefahr zu laufen, dass das Sägewerkzeug beschädigt oder dessen Standzeit verringert wird.

Um die Nebenzeiten noch stärker zu verkürzen und somit den Zeitaufwand für einen Sägevorgang vorteilhaft klein zu halten, ist es bevorzugt, die Leerlaufvorschubgeschwindigkeit in mindestens zwei Geschwindigkeitsstufen zu unterteilen, wobei eine erste Geschwindigkeitsstufe als Eilgang und eine zweite Geschwindigkeitsstufe als Annäherungsgeschwindigkeit ausgestaltet ist. Hier kann dann im Bereich eines vorgewählten oder vorwählbaren, oder gegebenenfalls auch mit entsprechender Sensorik zu ermittelnden Annäherungsabstands zwischen dem Sägewerkzeug und dem zu sägenden Werkstück ein Umsteuern, in der Regel ein Abbremsen vom Eilgang auf die Annäherungsgeschwindigkeit erfolgen, so dass der Eilgang nochmals schneller sein kann als die eigentliche Leerlaufvorschubgeschwindigkeit.

Eine vorteilhafte Weiterbildung der vorliegenden Erfindung kann auch darin bestehen, den Wert der Leerlaufvorschubgeschwindigkeit bzw. der Annäherungsgeschwindigkeit von den Dimensionen und der Form des zu sägenden Werkstücks und/oder vom Material des zu sägenden Werkstücks abhängig zu machen. Bei massiven Formen und/oder besonders zähen Materialien des Werkstücks empfiehlt sich eine geringere Leerlaufvorschubgeschwindigkeit bzw. Annäherungsgeschwindigkeit, um eine Beschädigung oder übergroße Belastung des Sägewerkzeugs zu vermeiden, während bei weichen Materialien und/oder Formen der Werkstücke, bei denen bei einem ersten Ankratzen nur ein geringer Eingriff des Sägewerkzeugs in das Material erfolgt, wie dies beispielsweise bei Rundmaterialien der Fall ist, die Leerlaufvorschubgeschwindigkeit bzw. die Annäherungsgeschwindigkeit höher gewählt werden kann, ohne eine Beschädigung oder allzu hohe Belastung des Sägewerkzeugs befürchten zu müssen.

Eine weitere bevorzugte Weiterbildung der vorliegenden Erfindung besteht darin, die Geschwindigkeit des angetriebenen Sägewerkzeugs im Bereich eines Annäherungsabstands zwischen dem Sägewerkzeug und dem Werkstück zu erhöhen, um bei einem ersten Eingriff des Sägewerkzeugs in das Werkstück, bei dem erfindungsgemäß das Umsteuern der Vorschubgeschwindigkeit auf die Arbeitsvorschubgeschwindigkeit erfolgt, die Vorschubstrecke pro Sägezahn zu verringern. Dies hilft zusätzlich, die Belastung des Sägewerkzeugs beim Eingriff in das Werkstück zu verringern, selbst wenn das erfindungsgemäße Umsteuern von der Leerlaufvorschubgeschwindigkeit auf die Arbeitsvorschubgeschwindigkeit nicht innerhalb allerkürzester Zeit erfolgt, wie dies wegen der Massenträgheiten der Fall ist, wenn die Leerlaufvorschubgeschwindigkeit besonders hoch gewählt wird.

Aus dem gleichen Grund ist eine weitere Ausgestaltung des erfindungsgemäßen Verfahrens bzw. der erfindungsgemäßen Sägemaschine, alternativ oder zusätzlich zu den vorgenannten Weiterbildungen, bevorzugt, bei der das Sägewerkzeug gedämpft und/oder vorgespannt an das Werkstück herangeführt wird, wobei die Dämpfung bzw. Vorspannung relativ zu einer in Richtung der Vorschubgeschwindigkeit wirkenden Schnittkraft erfolgt. Die Sägemaschine umfasst hierfür Anstellmittel zum Aufbringen der Schnittkraft, die mit Dämpfungselementen versehen sind. Solche Anstellmittel sind bei Bandsägemaschinen in der Regel Führungen für das Sägeband, insbesondere Bandrückenführungen, während die Anstellmittel bei Kreissägemaschinen Teil der Sägevorschubeinrichtung sind. Die genannten Dämpfungselemente können beispielsweise Federpakete sein, die eine etwa stark erhöhte Schnittkraft bzw. deren Rückwirkung auf das Schneidwerkzeug dämpfen. Eine solche stark erhöhte Schnittkraft kann beim Auftreffen des Sägewerkzeugs auf das zu sägende Werkstück insbesondere dann auftreten, wenn besonders hohe Leerlaufvorschubgeschwindigkeiten bzw. Annäherungsgeschwindigkeiten gewählt werden.

Im Falle einer Bandsägemaschine können die Dämpfungselemente auch, insbesondere wenn sie als Federn oder Federpakete ausgestaltet sind, für eine Vorspannung des Sägebands sorgen. Aufgrund einer solchen Vorspannung in Richtung der Vorschubgeschwindigkeit kann das Sägeband beim Auftreffen auf das Werkstück insgesamt mehr nachgeben, als dies mit einer reinen Dämpfung der Fall wäre.

Als besonders bevorzugte Weiterbildung und zweiter Aspekt der vorliegenden Erfindung wird schließlich der erfindungsgemäß im ersten Frequenzumrichter ermittelte Wert der physikalischen Größe, die Rückschlüsse auf das vom Sägewerkzeugantrieb ausgeübte Drehmoment zulässt, zur Regelung des eigentlichen Schnittvorgangs verwendet, insbesondere indem das vom Sägewerkzeugantrieb auf das Sägewerkzeug übertragene Drehmoment im Wesentlichen konstant gehalten wird. Insbesondere bei zylinderförmigen Werkstücken und bei Profilen können die Belastungen des Sägewerkzeugs während des Schneidvorgangs stark variieren, da einmal mehr und einmal weniger Sägezähne im Eingriff mit dem Material des Werkstücks stehen. Über das Auswerten der Rückwirkungen des Sägewerkzeugantriebs im ersten Frequenzumrichter erhält man genaue Rückschlüsse auf die momentane Belastung am Sägewerkzeug. Regelt man die Vorschubgeschwindigkeit des Sägewerkzeugs in Abhängigkeit von dem im ersten Frequenzumrichter ermittelten Istwert der physikalischen Größe beispielsweise solcherart, dass das vom Sägewerkzeugantrieb auf das Sägewerkzeug übertragene Drehmoment im Wesentlichen konstant bleibt, bleibt die Belastung des Sägewerkzeugs unabhängig von der Form des Werkstücks konstant. Schmalere Werkstückabschnitte werden dann automatisch mit höherer Arbeitsvorschubgeschwindigkeit gesägt als massivere Werkstückabschnitte, so dass dann nicht nur erfindungsgemäß die Nebenzeiten eines Sägevorgangs verkürzt werden, sondern auch der eigentliche Schneidvorgang hinsichtlich der Arbeitsvorschubgeschwindigkeit optimiert wird und eine weitere Verkürzung des Sägevorgangs erzielt werden kann.

Ein Ausführungsbeispiel für eine erfindungsgemäße Sägemaschine, die mit einem Beispiel für ein erfindungsgemäßes Verfahren betrieben wird, wird im Folgenden anhand der beigefügten Zeichnungen erläutert. Es zeigen:
- Figur 1: eine schematische Ansicht einer Bandsägemaschine, die erfindungsgemäß ausgestaltet ist,
- Figur 2: eine schematische Darstellung der erfindungswesentlichen Komponenten dieser Bandsägemaschine;
- Figur 3: ein Diagramm zur Verdeutlichung der unterschiedlichen Bewegungen und Geschwindigkeiten dieser Bandsägemaschine;
- Figur 4: eine schematische Ansicht einer Bandführung einer Bandsägemaschine mit einer federbelasteten Bandrückenführung;
- Figur 5: ein schematisches Prinzipschaltbild der Steuerung der Antriebe einer erfindungsgemäß ausgestalteten Sägemaschine.

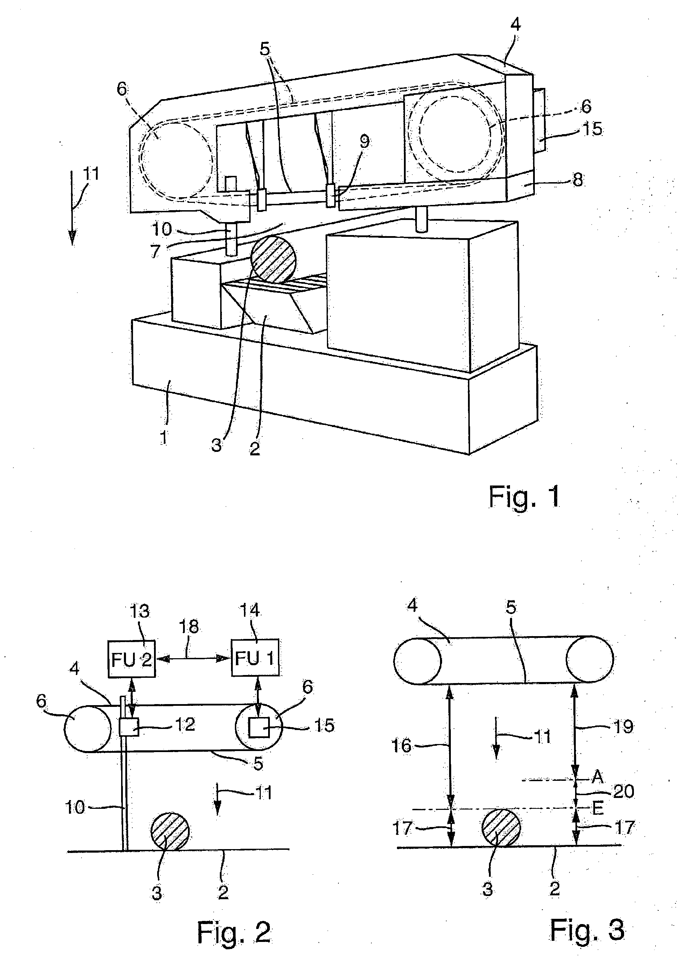

In Figur 1 ist eine Bandsägemaschine schematisch dargestellt, mit einer Basis 1, einem darauf angebrachten Sägetisch 2 für ein zu sägendes Werkstück 3 und einem gegenüber der Basis 1 beweglichen Sägemodul 4, in dem ein Sägeband 5 endlos um zwei Laufräder 6 umläuft. In einem Schneidbereich 7 verläuft das Sägeband 5 außerhalb eines Sägemodulgehäuses 8, und es wird dort mittels zweier Bandführungen 9, die rechts und links des Schneidbereichs 7 angeordnet sind, geführt. Diese Bandführungen 9 bestehen aus jeweils zwei seitlichen Bandführungen und einer Bandrückenführung, wobei die Bandrückenführung mittels Federpaketen gedämpft ist, so dass das Sägeband 5 gegen die Kraft des Federpakets elastisch nach oben nachgeben kann.

Das Sägemodul 4 sitzt auf Führungen 10 und ist gegenüber der Basis 1 auf und ab bewegbar. Die Abwärtsbewegung ist die Sägevorschubbewegung 11.

Wie anhand Figur 2, einer schematischen Darstellung der erfindungswesentlichen Teile der in Figur 1 dargestellten Bandsägemaschine, besser zu erkennen ist, erfolgt die Bewegung des Sägemoduls 4 entlang der Führungen 10 mittels eines Vorschubmotors 12, der von einem zweiten Frequenzumrichter 13 betrieben wird. Ein erster Frequenzumrichter 14 betreibt einen Motor 15, der auf einer Achse eines der beiden Laufräder 6 sitzt und dieses antreibt. Das vom Motor 15 erzeugte Drehmoment führt damit zum Antrieb des Sägebands 5, so dass dies mit einer Sägewerkzeuggeschwindigkeit um die beiden Laufräder 6 umläuft. Die Überlagerung einerseits der umlaufenden Bewegung des Sägebands 5, angetrieben vom Sägewerkzeugantrieb 14, 15, mit andererseits der Sägevorschubbewegung 11, angetrieben durch die Sägevorschubeinrichtung 10, 12, 13, erzeugt die Sägebewegung, die zum Trennschnitt führt.

Ein Beispiel für ein erfindungsgemäßes Verfahren wird in Figur 3 verdeutlicht. Das Sägemodul 4 senkt sich aufgrund der Sägevorschubbewegung 11 auf das Werkstück 3 ab. Hierbei wird eine Leerlaufstrecke 16 zurückgelegt, bis das Sägeband 5 am Niveau E der Leerlaufstrecke 16 Kontakt mit dem Werkstück 3 erhält. Danach erfolgt die Sägevorschubbewegung 11 entlang einer Arbeitsstrecke 17, bis das Werkstück 3 durchgesägt ist. Die Leerlaufstrecke 16 wird mit einer Leerlaufvorschubgeschwindigkeit zurückgelegt. Bei Erreichen des Niveaus E erhalten die Zähne des Sägebands 5 Kontakt mit der Oberfläche des Werkstücks 3 und beginnen in dieses einzudringen. Hierdurch wird die Umlaufbewegurig des Sägebands 5 gebremst, so dass der Motor 15 ein höheres Drehmoment an das Laufrad 6 bzw. das Sägeband 5 abgeben muss, um die Umlaufbewegung des Sägebands 5 aufrecht zu erhalten. Die erhöhte Drehmomentanforderung führt zu einer entsprechenden Rückwirkung auf den ersten Freqüenzumrichter 14, insbesondere fließt ein höherer Wirkstrom. Dies wird im ersten Frequenzumrichter 14 erkannt und über eine digitale Datenleitung 18, eine analoge Datenleitung oder eine Busleitung an den zweiten Frequenzumrichter 13 gemeldet, welcher seinerseits den Vorschubmotor 12 umgehend von der Leerlaufvorschubgeschwindigkeit auf eine Arbeitsvorschubgeschwindigkeit abbremst. Der eigentliche Schneidvorgang, also das Durchlaufen der Arbeitsstrecke 17, wird vom Sägemodul 4 bzw. vom Sägeband 5 dann in der Arbeitsvorschubgeschwindigkeit zurückgelegt.

Ein zweites Ausführungsbespiel für eine erfindungsgemäße Verfahrensweise ist ebenfalls anhand Figur 3 erkennbar. Hier bewegt sich das Sägemodul 4 entlang einer Eilstrecke 19 zunächst in einer gegenüber der eigentlichen Leerlaufvorschubgeschwindigkeit nochmals erhöhten Vorschubgeschwindigkeit als Eilgang. Bei Erreichen eines voreinstellbaren Niveaus A bremst der zweite Frequenzumrichter 13 den Vorschubmotor 12 auf die eigentliche Leerlaufvorschubgeschwindigkeit ab, mit der dann eine Annäherungsstrecke 20 durchlaufen wird, bis wiederum der Eingriff der ersten Zähne des Sägebands 5 in das Werkstück 3 beim Niveau E erfolgt und die Vorschubgeschwindigkeit von der Leerlaufvorschubgeschwindigkeit in die Arbeitsvorschubgeschwindigkeit umgesteuert wird, um dann wie im ersten Ausführungsbeispiel die Arbeitsstrecke 17 bis zum fertigen Sägeschnitt zu durchlaufen.

In einem dritten Ausführungsbeispiel ist die Arbeitsvorschubgeschwindigkeit über die Arbeitsstrecke 17 hinweg nicht konstant, sondern es wird mittels der Rückwirkungen des Motors 15, die im ersten Frequenzumrichter 14 erkannt und ausgewertet werden, das vom Motor 15 auf das Laufrad 6 und damit das Sägeband 5 abgegebene Drehmoment im Wesentlichen konstant gehalten, indem der erste Frequenzumrichter 14 ein Regelsignal über eine Busleitung oder eine digitale oder analoge Datenleitung an den zweiten Frequenzumrichter 13 abgibt. Da vorliegend ein Rundmaterial bzw. ein zylinderförmiges Werkstück 3 gesägt wird, kann die Arbeitsvorschubgeschwindigkeit zu Beginn des eigentlichen Schneidvorgangs, am Niveau E, zunächst noch höher gewählt werden, da dort nur wenige Zähne des Sägebands 5 gleichzeitig im Eingriff mit dem Material 3 stehen. Mit zunehmendem Sägefortschritt ändert sich dies, da das Werkstück aufgrund seines Profils für das Sägeband 5 immer dicker wird und immer mehr Sägezähne gleichzeitig im Eingriff mit dem Material stehen. Aufgrund des Konstanthaltens des vom Motor 15 abgegebenen Drehmoments verringert sich die Arbeitsvorschubgeschwindigkeit entsprechend, so dass die Belastung des Sägebands 5 optimal bleibt. Gegen Ende des eigentlichen Sägeschnitts nimmt die Dicke des Werkstücks 3 wiederum ab, so dass die Arbeitsvorschubgeschwindigkeit wieder erhöht werden kann, ohne das Sägeband 5 unzulässig hoch zu belasten.

Ohne eine solche Regelung müsste die Arbeitsvorschubgeschwindigkeit zum Schutz des Sägebands 5 über die gesamte Arbeitsstrecke 17 hinweg auf den minimalen Wert gesetzt werden. Die Regelung reduziert also die für den eigentlichen Schneidvorgang benötigte Zeit nochmals zusätzlich.

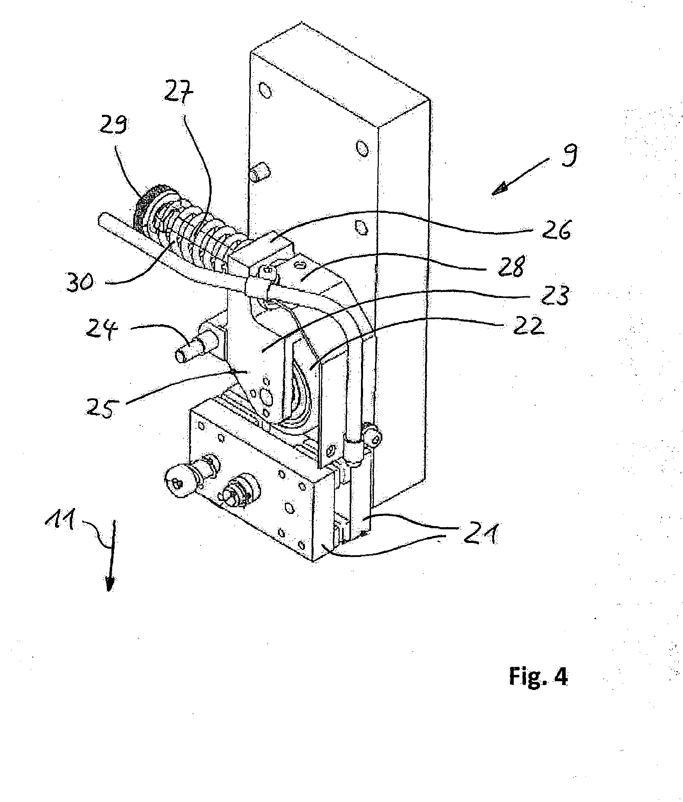

Figur 4 zeigt in einer schematischen Teilansicht eine Bandführung 9 einer Bandsägemaschine, die mit einer federbelasteten Bandrückenführung ausgestattet ist, um das Sägewerkzeug, in diesem Fall ein Sägeband (nicht dargestellt) sowohl vorgespannt als auch gedämpft an das Werkstück (wiederum nicht dargestellt) heranzuführen. Hierfür umfasst die Bandführung 9 zwei Bandführungsplatten 21 zur seitlichen Führung des zwischen diesen hindurch gleitenden (nicht dargestellten) Sägebandes,sowie eine als Rolle 22 ausgebildete Bändrückenführung, die auf dem Rücken des Sägebandes abrollt und dieses in Richtung der Vorschubbewegung 11 vorspannt. Hierfür ist die Rolle 22 in einer Schwinge 23 gelagert, die einen zweiarmigen Hebel um eine Schwingenachse 24 bildet. Ein erster Arm 25 des Hebels führt die Rolle 22, während ein zweiter Arm 26 des Hebels auf einer Zugstange 27 sitzt, welche in einem festen Gegenlager 28 verankert und in ihrer Länge mittels einer Einstellmutter 29 veränderbar ist. Zwischen der Einstellmutter 29 und dem zweiten Arm 26 der Schwinge 23 ist eine Schraubenfeder 30 angeordnet, die den zweiten Arm 26 zum Gegenlager 28 hin vorspannt und aufgrund des Hebelarms der Schwinge 23 somit auch die Rolle 22 gegen den Rücken des Sägebandes (nicht dargestellt) vorspannt. Eine Bewegung des Sägebandes gegen die Sägevorschubbewegung 11, die beim Auftreffen des Sägebandes auf das zu sägende Werkstück auftreten kann, wird durch die Schraubenfeder gedämpft, da die Rolle 22 insoweit federbelastet nachgeben kann.

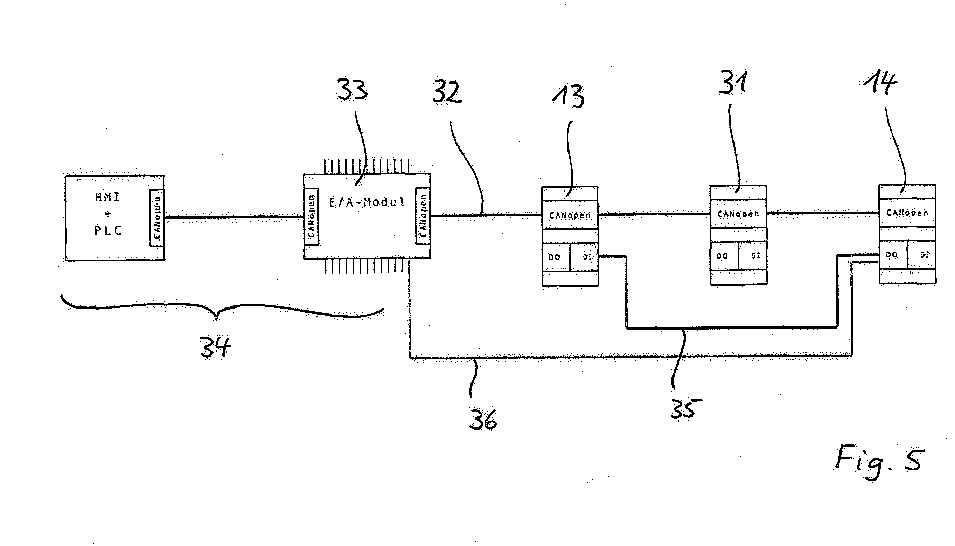

Figur 5 ist ein schematisches Prinzipschaltbild der Steuerung der Antriebe einer erfindungsgemäß ausgestalteten Sägemaschine. Ein erster Frequenzumrichter 14 für den Sägewerkzeugantrieb, ein zweiter Frequenzumrichter 13 für die Sägevorschubeinrichtung und ein dritter Frequenzumrichter 31 für eine Materialvorschubeinrichtung zum Positionieren des zu sägenden Werkstücks sind über einen Bus 32 mit einem E/A-Modul einer speicherprogrammierbaren Steuerung 34 verbunden.

In bevorzugter Ausgestaltung gemäß der vorliegende Erfindung ist der erste Frequenzumrichter 14 über eine erste Signalleitung 35, die vom digitalen Ausgang DO des ersten Frequenzumrichters 14 ausgeht, mit einem digitalen Eingang DI des zweiten Frequenzumrichters 13 verbunden. Auf diese Weise kann der erste Frequenzumrichter 14 den zweiten Frequenzumrichter 13 mittels eines digitalen Signals, das direkt über die erste Signalleitung 35 übermittelt wird, zum Umsteuern in die Arbeitsvorschubgeschwindigkeit veranlassen.

In einer weiteren, von der vorliegenden Erfindung ebenfalls umfassten Alternative ist der erste Frequenzumrichter 14 mit einer zweiten Signalleitung 36 direkt mit dem E/A-Modul 33 der speicherprogrammierbaren Steuerung 34 verbunden, um ein Signal zum Umsteuern der Vorschubgeschwindigkeit auf direktem Wege an die speicherprogrammierbare Steuerung 34 abzugeben, woraufhin diese das Umsteuern auf die Arbeitsvorschubgeschwindigkeit veranlassen kann.

Eine dritte Alternative, die ebenfalls von der vorliegenden Erfindung umfasst ist, besteht darin, dass der erste Frequenzumrichter 14 das Signal zum Umsteuern der Vorschubgeschwindigkeit über den Bus 32 an die speicherprogrammierbare Steuerung 34 abgibt, wo das Signal weiterverarbeitet und zum Umsteuern der Vorschubgeschwindigkeit verwendet wird.

## Patentansprüche

1. Verfahren zum Steuern einer Sägemaschine mit einem Sägewerkzeug (5), das von einem elektrischen Sägewerkzeugantrieb mit einem ersten Frequenzumrichter (14) angetrieben wird,
und mit einer Sägevorschubeinrichtung zum Bewegen des angetriebenen Sägewerkzeugs (5) relativ zu einem zu sägenden Werkstück (3) mit einer Vorschubgeschwindigkeit,
wobei die Vorschubgeschwindigkeit beim Eingriff des Sägewerkzeugs (5) in das Werkstück (3) von einer Leerlaufvorschubgeschwindigkeit auf eine Arbeitsvorschubgeschwindigkeit umgesteuert wird,
**dadurch gekennzeichnet,**
**dass** am ersten Frequenzumrichter (14) ein Wert einer physikalischen Größe ermittelt wird, die dem vom Sägewerkzeugantrieb auf das Sägewerkzeug (5) übertragenen Drehmoment entspricht oder aus der eine Veränderung dieses Drehmoments errechnet werden kann,
und **dass** das Umsteuern von der Leerlaufvorschubgeschwindigkeit auf die Arbeitsvorschubgeschwindigkeit in Abhängigkeit vom Wert dieser physikalischen Größe erfolgt.

2. Verfahren nach Anspruch 1,
**dadurch gekennzeichnet,**
**dass** als physikalische Größe ein von dem ersten Frequenzumrichter (14) an einen Motor (15) des elektrischen Sägewerkzeugantriebs abgegebener Wirkstrom verwendet wird.

3. Verfahren nach einem der vorangegangenen Ansprüche,
**dadurch gekennzeichnet,**
**dass** der am ersten Frequenzumrichter (14) ermittelte Wert der physikalischen Größe mit einem Filterverfahren zum Glätten seines zeitlichen Verlaufs bearbeitet wird.

4. Verfahren nach einem der vorangegangenen Ansprüche,
**dadurch gekennzeichnet,**
**dass** das Umsteuern von der Leerlaufvorschubgeschwindigkeit auf die Arbeitsvorschubgeschwindigkeit in Abhängigkeit von einer Differenz zwischen einem laufend oder in Intervallen am ersten Frequenzumrichter (14) ermittelten Istwert der physikalischen Größe und einem mittleren Leerlaufwert erfolgt und/oder von einem Anstieg des Istwertes der physikalischen Größe ausgelöst wird.

5. Verfahren nach Anspruch 4,
**dadurch gekennzeichnet,**
**dass** das Umsteuern von der Leerlaufvorschubgeschwindigkeit auf die Arbeitsvorschubgeschwindigkeit durch ein Überschreiten eines Schwellwertes für die Differenz zwischen dem Istwert der physikalischen Größe und dem Leerlaufwert ausgelöst wird.

6. Verfahren einem der vorangegangenen Ansprüche,
**dadurch gekennzeichnet,**
**dass** die Sägevorschubeinrichtung einen zweiten Frequenzumrichter (13) und einen von diesem betriebenen Vorschubmotor (12) umfasst und dass das Umsteuern von der Leerlaufvorschubgeschwindigkeit auf die Arbeitsvorschubgeschwindigkeit in Abhängigkeit eines von dem ersten Frequenzumrichter (14) an den zweiten Frequenzumrichter (13) abgegebenen Signals erfolgt.

7. Verfahren nach einem der vorangegangenen Ansprüche,
**dadurch gekennzeichnet,**
**dass** die Leerlaufvorschubgeschwindigkeit eine erste Geschwindigkeitsstufe als Eilgang und eine zweite Geschwindigkeitsstufe als Annäherungsgeschwindigkeit umfasst, wobei im Bereich eines Annäherungsabstands (A) zwischen dem Sägewerkzeug (5) und dem zu sägenden Werkstück (3) ein Umsteuern der Sägevorschubeinrichtung von dem Eilgang auf die Annäherungsgeschwindigkeit erfolgt.

8. Verfahren nach einem der vorangegangenen Ansprüche,
**dadurch gekennzeichnet,**
**dass** die Arbeitsvorschubgeschwindigkeit in Abhängigkeit von der physikalischen Größe geregelt wird, insbesondere derart, dass das vom Sägewerkzeugantrieb auf das Sägewerkzeug (5) übertragene Drehmoment im Wesentlichen konstant gehalten wird.

9. Verfahren nach einem der vorangegangenen Ansprüche,
**dadurch gekennzeichnet,**
**dass** das Sägewerkzeug (5) gedämpft und/oder vorgespannt an das Werkstück (3) herangeführt wird, wobei die Dämpfung und/oder die Vorspannung relativ zu einer in Richtung der Vorschubgeschwindigkeit wirkenden Schnittkraft erfolgt.

10. Verfahren nach einem der vorangegangenen Ansprüche,
**dadurch gekennzeichnet,**
**dass** die Leerlaufvorschubgeschwindigkeit und/oder die Arbeitsvorschubgeschwindigkeit und/oder ein Verhältnis von Leerlaufvorschubgeschwindigkeit zu Arbeitsvorschubgeschwindigkeit in Abhängigkeit von der Geometrie und/oder dem Material des zu sägenden Werkstücks (3) ausgewählt werden kann.

11. Sägemaschine mit einem Sägewerkzeug (5), das von einem elektrischen Sägewerkzeugantrieb mit einem ersten Frequenzumrichter (14) angetrieben wird,
und mit einer Sägevorschubeinrichtung zum Bewegen des angetriebenen Sägewerkzeugs (5) relativ zu einem zu sägenden Werkstück (3) mit einer Vorschubgeschwindigkeit,
wobei die Sägevorschubeinrichtung derart ausgebildet ist, dass die Vorschubgeschwindigkeit beim Eingriff des Sägewerkzeugs (5) in das Werkstück (3) von einer Leerlaufvorschubgeschwindigkeit auf eine Arbeitsvorschubgeschwindigkeit umsteuerbar ist,
**dadurch gekennzeichnet,**
**dass** die Sägevorschubeinrichtung derart ausgebildet ist, dass am ersten Frequenzumrichter (14) ein Wert einer physikalischen Größe ermittelt wird, die dem von dem Sägewerkzeugantrieb auf das Sägewerkzeug (5) übertragenen Drehmoment entspricht oder aus der eine Veränderung dieses Drehmoments errechnet werden kann,
und **dass** das Umsteuern von der Leerlaufvorschubgeschwindigkeit auf die Arbeitsvorschubgeschwindigkeit in Abhängigkeit vom Wert dieser physikalischen Größe erfolgt.

12. Sägemaschine nach Anspruch 11,
**dadurch gekennzeichnet,**
**dass** die Sägemaschine Anstellmittel zum Aufbringen einer in Richtung der Vorschubgeschwindigkeit wirkenden Schnittkraft auf das Sägewerkzeug (5) und/oder zur Führung des Sägewerkzeugs (5) in Richtung der Vorschubgeschwindigkeit aufweist, wobei die Anstellmittel mit Dämpfungselementen und/oder Vorspannungselementen zum gedämpften und/oder vorgespannten Heranführen des Sägewerkzeugs (5) an das Werkstück (3) versehen sind.

13. Sägemaschine nach einem der Ansprüche 11 oder 12,
**dadurch gekennzeichnet,**
**dass** die Sägevorschubeinrichtung einen zweiten Frequenzumrichter (13) und einen von diesem betriebenen Vorschubmotor (12) umfasst und dass das Umsteuern von der Leerlaufvorschubgeschwindigkeit auf die Arbeitsvor-schubgeschwindigkeit in Abhängigkeit eines von dem ersten Frequenzumrichter (14) an den zweiten Frequenzumrichter (13) abgegebenen Signals erfolgt.

14. Sägemaschine nach einem der Ansprüche 11 bis 13,
**dadurch gekennzeichnet,**
**dass** am ersten Frequenzumrichter (14) ein mittlerer Leerlaufwert der physikalischen Größe ermittelbar ist, wobei das Umsteuern von der Leerlaufvorschubgeschwindigkeit auf die Arbeitsvorschubgeschwindigkeit in Abhängigkeit von der Differenz zwischen einem Istwert der physikalischen Größe und dem Leerlaufwert erfolgt, insbesondere bei Überschreiten eines Schwellwertes der genannten Differenz.

15. Sägemaschine nach einem der Ansprüche 11 bis 14,
**dadurch gekennzeichnet,**
**dass** die Sägevorschubeinrichtung derart ausgebildet ist, dass die Leerlaufvorschubgeschwindigkeit eine erste Geschwindigkeitsstufe als Eilgang und eine zweite Geschwindigkeitsstufe als Annäherungsgeschwindigkeit umfasst, wobei im Bereich eines Annäherungsabstands (A) zwischen dem Sägewerkzeug (5) und dem zu sägenden Werkstück (3) ein Umsteuern der Sägevorschubeinrichtung von dem Eilgang auf die Annäherungsgeschwindigkeit erfolgt.

16. Sägemaschine nach einem der Ansprüche 11 bis 15,
**dadurch gekennzeichnet,**
**dass** der erste Frequenzumrichter (14) die Arbeitsvorschubgeschwindigkeit in Abhängigkeit von der physikalischen Größe regelt, insbesondere derart, dass das vom Sägewerkzeugantrieb auf das Sägewerkzeug (5) übertragene Drehmoment im Wesentlichen konstant ist.

17. Sägemaschine nach einem der Ansprüche 11 bis 16,
**dadurch gekennzeichnet,**
**dass** die Leerlaufvorschubgeschwindigkeit und/oder die Arbeitsvorschubgeschwindigkeit und/oder ein Verhältnis von Leerlaufvorschubgeschwindigkeit zu Arbeitsvorschubgeschwindigkeit in Abhängigkeit von der Geometrie und/oder dem Material des zu sägenden Werkstücks (3) auswählbar ist.

## Claims

1. Method of controlling a sawing machine having a sawing tool (5), which is driven by an electric sawing tool drive means having a first frequency converter (14),
and having a saw feed device for moving the driven sawing tool (5) at a feed rate relative to a workpiece (3) to be sawn,
wherein on engagement of the sawing tool (5) in the workpiece (3) the feed rate is switched from an idling feed rate to a working feed rate,
**characterised in that**
at the first frequency converter (14) there is determined a value of a physical variable which corresponds to the torque transmitted from the sawing tool drive means to the sawing tool (5) or from which a change **in that** torque can be calculated,
and the switchover from the idling feed rate to the working feed rate takes place in dependence upon the value of that physical variable.

2. Method according to claim 1,
**characterised in that**
an active current supplied by the first frequency converter (14) to a motor (15) of the electric sawing tool drive means is used as physical variable.

3. Method according to either one of the preceding claims,
**characterised in that**
the value of the physical variable determined at the first frequency converter (14) is processed by means of a filtering process to smooth its variation over time.

4. Method according to any one of the preceding claims,
**characterised in that**
the switchover from the idling feed rate to the working feed rate takes place in dependence upon a difference between an actual value of the physical variable, which value is determined continuously or at intervals at the first frequency converter (14), and an average idling value and/or is initiated by a rise in the actual value of the physical variable.

5. Method according to claim 4,
**characterised in that**
the switchover from the idling feed rate to the working feed rate is initiated by crossing of a threshold value for the difference between the actual value of the physical variable and the idling value.

6. Method according to any one of the preceding claims,
**characterised in that**
the saw feed device comprises a second frequency converter (13) and a feed motor (12) operated by the latter, and the switchover from the idling feed rate to the working feed rate takes place in dependence upon a signal emitted by the first frequency converter (14) to the second frequency converter (13).

7. Method according to any one of the preceding claims,
**characterised in that**
the idling feed rate comprises a first speed level as high-speed mode and a second speed level as approach speed, the saw feed device being switched from the high-speed mode to the approach speed in the region of an approach distance (A) between the sawing tool (5) and the workpiece (3) to be sawn.

8. Method according to any one of the preceding claims,
**characterised in that**
the working feed rate is controlled in dependence upon the physical variable, especially in such a way that the torque transmitted from the sawing tool drive means to the sawing tool (5) is kept substantially constant.

9. Method according to any one of the preceding claims,
**characterised in that**
the movement of the sawing tool (5) towards the workpiece (3) is damped and/or biased, the damping and/or the biasing being effected relative to a cutting force acting in the feed rate direction.

10. Method according to any one of the preceding claims,
**characterised in that**
the idling feed rate and/or the working feed rate and/or a ratio of idling feed rate to working feed rate can be selected in dependence upon the geometry and/or the material of the workpiece (3) to be sawn.

11. Sawing machine having a sawing tool (5), which is driven by an electric sawing tool drive means having a first frequency converter (14),
and having a saw feed device for moving the driven sawing tool (5) at a feed rate relative to a workpiece (3) to be sawn,
wherein the saw feed device is arranged in such a way that on engagement of the sawing tool (5) in the workpiece (3) the feed rate is switchable from an idling feed rate to a working feed rate, **characterised in that**
the saw feed device is arranged in such a way that there is determined at the first frequency converter (14) a value of a physical variable which corresponds to the torque transmitted from the sawing tool drive means to the sawing tool (5) or from which a change **in that** torque can be calculated,
and the switchover from the idling feed rate to the working feed rate takes place in dependence upon the value of that physical variable.

12. Sawing machine according to claim 11,
**characterised in that**
the sawing machine has adjusting means for applying to the sawing tool (5) a cutting force that acts in the feed rate direction and/or for guiding the sawing tool (5) in the feed rate direction, wherein the adjusting means are provided with damping elements and/or biasing elements for damped and/or biased movement of the sawing tool (5) towards the workpiece (3).

13. Sawing machine according to either one of claims 11 and 12,
**characterised in that**
the saw feed device comprises a second frequency converter (13) and a feed motor (12) operated by the latter, and the switchover from the idling feed rate to the working feed rate takes place in dependence upon a signal emitted by the first frequency converter (14) to the second frequency converter (13).

14. Sawing machine according to any one of claims 11 to 13,
**characterised in that**
an average idling value of the physical variable is determinable at the first frequency converter (14), the switchover from the idling feed rate to the working feed rate taking place in dependence upon the difference between an actual value of the physical variable and the idling value, especially when a threshold value of the said difference is crossed.

15. Sawing machine according to any one of claims 11 to 14,
**characterised in that**
the saw feed device is arranged in such a way that the idling feed rate comprises a first speed level as high-speed mode and a second speed level as approach speed, the saw feed device being switched from the high-speed mode to the approach speed in the region of an approach distance (A) between the sawing tool (5) and the workpiece (3) to be sawn.

16. Sawing machine according to any one of claims 11 to 15,
**characterised in that**
the first frequency converter (14) controls the working feed rate in dependence upon the physical variable, especially in such a way that the torque transmitted from the sawing tool drive means to the sawing tool (5) is substantially constant.

17. Sawing machine according to any one of claims 11 to 16,
**characterised in that**
the idling feed rate and/or the working feed rate and/or a ratio of idling feed rate to working feed rate is selectable in dependence upon the geometry and/or the material of the workpiece (3) to be sawn.

## Revendications

1. Procédé de commande d'une machine de sciage comprenant un outil de sciage (5) entraîné par un entraînement électrique muni d'un premier convertisseur de fréquence (14),
et un dispositif de progression du sciage qui est conçu pour mouvoir l'outil de sciage (5) entraîné, à une vitesse d'avance, par rapport à une pièce (3) à scier,
la commande de ladite vitesse d'avance étant inversée, lors de la pénétration dudit outil de sciage (5) dans ladite pièce (3), pour passer d'une vitesse d'avance de course à vide à une vitesse d'avance de travail,
**caractérisé par**
la détermination, sur le premier convertisseur de fréquence (14), d'une valeur d'une grandeur physique qui correspond au couple de rotation transmis à l'outil de sciage (5) par l'entraînement dudit outil de sciage, ou à partir de laquelle une variation de ce couple de rotation peut être calculée ;
et par le fait que l'inversion de commande, passant de la vitesse d'avance de course à vide à la vitesse d'avance de travail, s'opère en fonction de la valeur de cette grandeur physique.

2. Procédé selon la revendication 1,
**caractérisé par le fait**
**qu'**un courant actif, délivré à un moteur (15) de l'entraînement électrique de l'outil de sciage par le premier convertisseur de fréquence (14), est utilisé en tant que grandeur physique.

3. Procédé selon l'une des revendications précédentes,
**caractérisé par le fait**
**que** la valeur de la grandeur physique, déterminée sur le premier convertisseur de fréquence (14), est traitée par un procédé de filtrage en vue de lisser son allure dans le temps.

4. Procédé selon l'une des revendications précédentes,
**caractérisé par le fait**
**que** l'inversion de commande, passant de la vitesse d'avance de course à vide à la vitesse d'avance de travail, s'opère en fonction d'une différence entre une valeur moyenne de course à vide et une valeur réelle de la grandeur physique déterminée sur le premier convertisseur de fréquence (14), en continu ou par intervalles ; et/ou est déclenchée par un accroissement de ladite valeur réelle de la grandeur physique.

5. Procédé selon la revendication 4,
**caractérisé par le fait**
**que** l'inversion de commande, passant de la vitesse d'avance de course à vide à la vitesse d'avance de travail, est déclenchée par un dépassement d'une valeur de seuil assignée à la différence entre la valeur réelle de la grandeur physique et la valeur de course à vide.

6. Procédé selon l'une des revendications précédentes,
**caractérisé par le fait**
**que** le dispositif de progression du sciage inclut un second convertisseur de fréquence (13) et un moteur d'avance (12) actionné par ce dernier ; et par le fait que l'inversion de commande, passant de la vitesse d'avance de course à vide à la vitesse d'avance de travail, s'opère en fonction d'un signal délivré audit second convertisseur de fréquence (13) par le premier convertisseur de fréquence (14).

7. Procédé selon l'une des revendications précédentes,
**caractérisé par le fait**
**que** la vitesse d'avance de course à vide comprend un premier échelon de vitesse représentant une marche rapide, et un second échelon de vitesse représentant une vitesse d'approche, sachant qu'une inversion de commande du dispositif de progression du sciage, passant de ladite marche rapide à ladite vitesse d'approche, s'opère dans la plage d'une distance d'approche (A) entre l'outil de sciage (5) et la pièce (3) à scier.

8. Procédé selon l'une des revendications précédentes,
**caractérisé par le fait**
**que** la vitesse d'avance de travail est régulée en fonction de la grandeur physique, en particulier de façon telle que le couple de rotation, transmis à l'outil de sciage (5) par l'entraînement dudit outil de sciage, soit maintenu pour l'essentiel constant.

9. Procédé selon l'une des revendications précédentes,
**caractérisé par le fait**
**que** l'outil de sciage (5) est présenté à la pièce (3) de manière amortie et/ou précontrainte, l'amortissement et/ou la précontrainte s'effectuant relativement à une force de coupe agissant dans la direction de la vitesse d'avance.

10. Procédé selon l'une des revendications précédentes,
**caractérisé par le fait**
**que** la vitesse d'avance de course à vide et/ou la vitesse d'avance de travail, et/ou un rapport entre ladite vitesse d'avance de course à vide et ladite vitesse d'avance de travail, peu(ven)t être sélectionné(e)(s) en fonction du profil géométrique et/ou du matériau de la pièce (3) à scier.

11. Machine de sciage comprenant un outil de sciage (5) entraîné par un entraînement électrique muni d'un premier convertisseur de fréquence (14),
et un dispositif de progression du sciage qui est conçu pour mouvoir l'outil de sciage (5) entraîné, à une vitesse d'avance, par rapport à une pièce (3) à scier,
ledit dispositif de progression du sciage étant réalisé de telle sorte que la commande de ladite vitesse d'avance puisse être inversée, lors de la pénétration dudit outil de sciage (5) dans ladite pièce (3), pour passer d'une vitesse d'avance de course à vide à une vitesse d'avance de travail,
**caractérisée par le fait**
**que** le dispositif de progression du sciage est réalisé de façon telle qu'il soit déterminé, sur le premier convertisseur de fréquence (14), une valeur d'une grandeur physique qui correspond au couple de rotation transmis à l'outil de sciage (5) par l'entraînement dudit outil de sciage, ou à partir de laquelle une variation de ce couple de rotation peut être calculée ;
et par le fait que l'inversion de commande, passant de la vitesse d'avance de course à vide à la vitesse d'avance de travail, s'opère en fonction de la valeur de cette grandeur physique.

12. Machine de sciage selon la revendication 11,
**caractérisée par le fait**
**que** ladite machine de sciage présente des moyens de réglage conçus pour appliquer, à l'outil de sciage (5), une force de coupe agissant dans la direction de la vitesse d'avance, et/ou pour guider ledit outil de sciage (5) dans la direction de ladite vitesse d'avance, lesdits moyens de réglage étant pourvus d'éléments d'amortissement et/ou d'éléments de précontrainte faisant en sorte que ledit outil de sciage (5) soit présenté à la pièce (3) avec amortissement et/ou précontrainte.

13. Machine de sciage selon l'une des revendications 11 ou 12,
**caractérisée par le fait**
**que** le dispositif de progression du sciage inclut un second convertisseur de fréquence (13) et un moteur d'avance (12) actionné par ce dernier ; et par le fait que l'inversion de commande, passant de la vitesse d'avance de course à vide à la vitesse d'avance de travail, s'opère en fonction d'un signal délivré audit second convertisseur de fréquence (13) par le premier convertisseur de fréquence (14).

14. Machine de sciage selon l'une des revendications 11 à 13,
**caractérisée par le fait**
**qu'**une valeur moyenne de course à vide de la grandeur physique peut être déterminée sur le premier convertisseur de fréquence (14), l'inversion de commande, passant de la vitesse d'avance de course à vide à la vitesse d'avance de travail, s'opérant alors en fonction de la différence entre une valeur réelle de ladite grandeur physique et ladite valeur de course à vide, en particulier lors du dépassement d'une valeur de seuil de la différence précitée.

15. Machine de sciage selon l'une des revendications 11 à 14,
**caractérisée par le fait**
**que** le dispositif de progression du sciage est réalisé de façon telle que la vitesse d'avance de course à vide comprenne un premier échelon de vitesse représentant une marche rapide, et un second échelon de vitesse représentant une vitesse d'approche, sachant qu'une inversion de commande dudit dispositif de progression du sciage, passant de ladite marche rapide à ladite vitesse d'approche, s'opère dans la plage d'une distance d'approche (A) entre l'outil de sciage (5) et la pièce (3) à scier.

16. Machine de sciage selon l'une des revendications 11 à 15,
**caractérisée par le fait**
**que** le premier convertisseur de fréquence (14) régule la vitesse d'avance de travail en fonction de la grandeur physique, en particulier de façon telle que le couple de rotation, transmis à l'outil de sciage (5) par l'entraînement dudit outil de sciage, soit maintenu pour l'essentiel constant.

17. Machine de sciage selon l'une des revendications 11 à 16,
**caractérisée par le fait**
**que** la vitesse d'avance de course à vide et/ou la vitesse d'avance de travail, et/ou un rapport entre ladite vitesse d'avance de course à vide et ladite vitesse d'avance de travail, peu(ven)t être sélectionné(e)(s) en fonction du profil géométrique et/ou du matériau de la pièce (3) à scier.
